# EUROPÄISCHE PATENTSCHRIFT

(11) **EP 3 454 432 B1**
(45) Veröffentlichungstag und Bekanntmachung des Hinweises auf die Patenterteilung: **10.06.2020**
(21) Anmeldenummer: 18153250.8
(22) Anmeldetag: 24.01.2018
(51) Int. Cl.: H01R 25/16, H02G 3/12, H01R 103/00, H01R 24/78

(54) **KANALSYSTEM**
CHANNEL SYSTEM
SYSTÈME DE CANAL

(30) Priorität: 11.09.2017 EP 17001513
(43) Veröffentlichungstag der Anmeldung: 13.03.2019
(73) Patentinhaber: Büyükay, Sinan, 42697 Solingen (DE)
(72) Erfinder: Büyükay, Sinan, 42697 Solingen (DE)
(74) Vertreter: Schneiders & Behrendt PartmbB Rechtsanwälte - Patentanwälte

(56) Entgegenhaltungen:
- WO-A1-2005/086295
- DE-A1- 3 817 440
- GB-A- 2 236 219
- GB-A- 2 262 399

## Beschreibung

Die Erfindung betrifft ein Kanalsystem mit Stromleiter und einer Vielzahl von Anschlüssen für Stromverbraucher, das mit einer Mehrzahl von Kanälen ausgestattet ist und einen Strom-, einen Neutral- und einen Erdleiter aufweist.

Leitungskanäle, insbesondere Kabelkanäle zur Aufnahme von Strom-, Telefon-, Antennen- und Netzwerkleitungen für Computer- und Internetanschlüsse sind an und für sich bekannt. Sie dienen Vielfach zur Ausstattung von Büro- und Produktionsräumen und bieten die entsprechenden Anschlussmöglichkeiten für die jeweils benötigten Geräte. Sie erleichtern die Kommunikation sowohl zwischen den Mitarbeitern innerhalb einer Firma oder eines Hauses als auch mit der Außenwelt.

Ein Nachteil der üblichen Leitungskanäle ist allerdings die beschränkte Anschlussmöglichkeit. Bereitgestellt werden immer nur einzelne Anschlusspunkte, die den Anschluss einer Mehrzahl von Geräten an gewünschten Orten nur über lange Kabelwege, Verlängerungen, Verzweigungen und dergleichen ermöglichen. Bekannt und vielfach gebraucht sind Mehrfachsteckdosen. Lange Kabelwege und vielfache Steckverbindungen sind aber nicht nur umständlich sondern könne auch die Qualität von Signalübertragungen negativ beeinflussen.

Die GB 2 262 399 A beschreibt eine Mehrfachsteckdose mit einem Kanalsystem, in dem die Steckkontakte eines Netzsteckers mit in verschiedenen Kanälen geführten Leitern in Kontakt gebracht werden können.

Aufgabe der Erfindung ist daher die Bereitstellung eines Verteilungssystems insbesondere für Strom, das Anschlussstellen für Stromverbraucher über die gesamte Länge des Systems ermöglicht. Gleichzeitig soll das System für die Übertragung von Fernseh-, Telefon- und Internetverbindungen geeignet sein.

Die Aufgabe wird gelöst mit einem Kanalsystem nach Anspruch 1.

Das erfindungsgemäße Kanalsystem ist im Prinzip ein mehrfach gekammerter Leitungskanal, der zum einen zahlreiche Anschlussmöglichkeiten für elektrische Verbraucher bietet und zum anderen separate Kanäle für weitere Leitungen, die insbesondere der Information und Kommunikation dienen, etwa Telefon, Fernsehen, Internet. Da das Kanalsystem selbst aus Metall besteht, kann es Teil eines Datennetzwerks sein. Schließlich kommt das erfindungsgemäße Kanalsystem auch als Trägerelement für eine Lichtleiste in Frage, etwa auch im Rahmen einer Notbeleuchtung.

Das erfindungsgemäße Kanalsystem ist als Längsprofil ausgelegt, das beispielsweise über die Länge eines Raumes reicht und an die Versorgungsleitungen eines Gebäudes angeschlossen ist. Insbesondere ist es für die Montage an Wänden bestimmt, etwa im Sockelbereich, wo es zugleich als "Fußleiste" dienen kann. Ecken können durch Winkelelemente überbrückt werden. Ein gekrümmter Verlauf ist ebenfalls möglich.

Das Kanalsystem hat eine Rückwand, einen Fußbereich und eine Frontseite, über die der erste Kanal zugänglich ist. Die Zugangsseite kann die Front- oder Oberseite sein. Eine vierte Seite kann mit einer Klappe abgedeckt sein und einen zusätzlichen, von außen zugänglichen Kanal bereitstellen.

Die Stromversorgung, d. h. der Stromleiter, der Neutralleiter und der Erdleiter, sind als Schienen ausgelegt und innerhalb des Kanalsystems fest verlegt. Dabei verlaufen der Strom- und der Neutralleiter parallel zueinander in einer ersten Längskammer, der Erdleiter, ebenfalls parallel dazu in einer zweiten Längskammer. Alle Leiter sind als Leiterschienen ausgelegt. Strom- und Neutralleiter weisen in regelmäßigen Abständen Steckkontakte (Kontaktbuchsen) auf, die alternierend vom Strom- und Neutralleiter in eine zwischen diese liegende Eben reichen. Die Abstände zwischen den Steckkontakten des Stromleiters betragen 38 mm, ebenso die Abstände zwischen den Steckkontakten des Neutralleiters. Da sie alternierend in eine dazwischen liegende Ebene ragen, ergibt sich eine Reihe von Steckkontakten mit einem Abstand von 19 mm, was dem Abstand der Kontaktstifte eines üblichen Schukosteckers entspricht (19 mm Achsabstand zwischen den runden Kontaktstiften). Die Steckkontakte entsprechen damit in Aufbau und Funktionsweise weitgehend den Steckkontakten einer herkömmlichen deutschen Netzsteckdose.

Es versteht sich, dass der Strom- und der Neutralleiter isoliert im ersten Kanal verlaufen, d. h. an keiner Stelle mit dem Metall des Kanalsystems in Berührung kommen. Die Isolierung wird zweckmäßigerweise über ein Kunststoffprofil bereitgestellt, das in diesem Kanal eingelegt wird und in das die Leiterschienen integriert oder an dem sie befestigt sind.

Strom-, Neutral- und Erdleiter sind zweckmäßigerweise so ausgelegt, dass sie dem deutschen Schuko-System entsprechen (Stecker-Typ F; CEE7/4 und CEE7/3).

Der Anschluss von herkömmlichen Eurosteckern und Konturensteckern (CEE7/17) ist ohne weiteres möglich, ebenso die Anpassung an andere Steckersysteme mit Schutzkontakt, wie sie beispielsweise in der Schweiz und in England üblich sind.

Das erfindungsgemäße Kanalsystem für Stromleiter ist in erster Linie nicht verpolungssicher, kann aber mit geringem Aufwand verpolungssicher ausgestaltet werden.

Das erfindungsgemäße Kanalsystem weist die erforderlichen Sicherheitselemente auf, um es insbesondere kindersicher zu gestalten. Dies bedingt zum einen Abschirmung der stromführenden Leiter durch Abdeckungen und Führungselemente und zum anderen einen Zugangsschutz auf der Einsteckseite des Kanalsystems. Eine Abdeckung kann beispielsweise in Form eines Kunststoffprofils, insbesondere eines Kunststoffkastenprofils mit einem Deckelelement bereitgestellt werden, das den Strom- und den Neutralleiter enthält und nur durch einen Deckel mit Durchbrechungen für die Kontaktstifte zugänglich ist. Solche Durchbrechungen können beispielsweise in Abständen von 19 mm (Achsabstand) angeordnete Rundlöcher mit einem genormten Durchmesser von 4,8 mm sein, aber auch Schlitze mit entsprechender Weite.

Zweckmäßigerweise ist die erste Kammer zur Aufnahme des Stromleiters und des Neutralleiters in zwei Abschnitte unterteilt, einen Leitungsteil und einen Führungsteil. Der Leitungsteil wird zweckmäßigerweise von dem Kunststoffkastenprofil mit Deckel gebildet, der Führungsteil, der auf der Zugangsseite des ersten Kanals und damit vor dem Leitungsteil gelegen ist, von zwei Führungselementen, die in Höhe der Steckkontakte einen geringen Raum zur Durchführung der Kontaktstifte eines Netzsteckers lassen. Zweckmäßigerweise befindet sich im Führungsteil ebenfalls ein Kunststoffkastenprofil zur Abschirmung und Isolierung.

Der erste Kanal weist an seiner Zugangsseite in Längsrichtung verlaufende obere und untere Leisten auf, die zum einen als Anschlag für einen üblichen Netzstecker mit Schutzkontakt dienen und zum anderen als Halterung für wenigstens eine flexible Abdeckleiste, zweckmäßigerweise zwei Abdeckleisten, die aufgesteckt werden und mit ihren Zungen in die Zugangsöffnung ragen. Die Abdeckleiste kann beispielsweise aus einem gummielastischen Material bestehen. Sie gibt beim Einstecken eines Netzsteckers nach und erlaubt den Durchtritt der Kontaktstifte. In Frage kommen auch Abdeckleisten, deren flexibler, nachgiebiger Teil von Bürstenelementen gebildet wird.

Die Führungselemente im Führungsteil des ersten Kanals können beispielsweise im Abstand zueinander längs verlaufende Kunststoffhohlprofile sein, die zwischen sich genügend Raum für das Einführen der Kontaktstifte eines Netzsteckers lassen.

Der Erdleiter ist ebenfalls als Leiterschiene ausgebildet und verläuft in einem zweiten Kanal, der auf die Dimensionen der Schiene abgestellt ist. Der zweite Kanal ist somit an die Dimension der Leiterschiene angepasst und steht in leitenden Kontakt mit wenigstens einem Teil der Leiterschiene, wobei die Kontaktelemente aus diesem zweiten Kanal herausragen, beispielsweise in Form von federnden Kontaktzungen, wie sie in üblichen Netzsteckdosen für das Schuko-System üblich sind. Solche Kontaktzungen sind in regelmäßigen Abständen mittig oberhalb der Steckkontakte angeordnet.

Die flexiblen Abdeckleisten, die die Zugangsseite des ersten Kanals abschließen, sind zweckmäßigerweise mit beweglichen Lippen ausgestattet, die sich um ein weniges überlappen können. Alternativ kommen hier Bürstenelemente in Frage, die sich ebenfalls im Bereich des Zugangs überdecken können.

Das erfindungsgemäße Kanalsystem weist zweckmäßigerweise wenigstens einen dritten Kanal zur Aufnahme von Leitungskabeln auf, vorzugsweise an seiner Oberseite. In diesem Fall kann der dritte Kanal durch eine Klappe abgedeckt sein, die auch bei dem montierten Kanalsystem den Zugang zu dem dritten Kanal erlaubt. Die Abdeckklappe ist vorzugsweise segmentiert, d. h. in Teilstücke von beispielsweise 50 cm oder 1 m unterteilt, um den Zugang zu erleichtern.

Um Anschlussmöglichkeiten zu den im dritten Kanal verlaufenden Leitungen zu ermöglichen, können übliche Anschlüsse vorgesehen sein, beispielsweise für Bildschirme, Telefone, Geräte eines Datenverarbeitungssystems.

Das System kann schließlich einen vierten Kanal zur Aufnahme einer Lichtleiste aufweisen, vorzugsweise im Fußbereich. Eine solche Lichtleiste kann beispielsweise eine Vielzahl von LEDs aufweisen, die an eine Stromversorgung angeschlossen sind. Weitere Kanäle zur Aufnahme von Leitungen sind möglich. Besonders bevorzugt sind Kanalsysteme mit vier oder fünf Kanälen.

Das erfindungsgemäße Kanalsystem bietet über seine gesamte, variable Länge eine Vielzahl von Anschlussmöglichkeiten, die die Notwendigkeit von Verlängerungskabeln und Mehrfachsteckdosen eliminiert. Die Ausführung in Metall bietet Vorteile hinsichtlich der Datenübertragung, aber auch gleichzeitig die notwendige Robustheit, die die Verwendung als Fußleiste verlangt.

Das erfindungsgemäße Kanalsystem besteht aus Metall, vorzugsweise aus Aluminium oder eine Aluminiumlegierung. Die Verwendung von Metall bietet eine gewisse Robustheit, sodass das System ohne weiteres als Sockel- oder Fußleiste eingesetzt werden kann.

Für das Leitersystem können die üblichen Metalle verwandt werden, insbesondere Kupfer und Kupferlegierungen, aber auch Aluminium und Aluminiumlegierungen. Besonders bevorzugt ist Messing, insbesondere CuZn30 mit 30% Zinkanteil wegen seiner guten Verformbarkeit. Zur Verbesserung der Eigenschaften können weitere Metalle zu legiert sein.

Die Verwendung von Metall für das Kanalsystem und die leitende Verbindung mit der Erde bietet ein hohes Maß an Sicherheit. Gleichzeitig ist die Verwendung von Metall wegen seiner guten Wärmeleitfähigkeit zur Wärmeabfuhr geeignet. Die Verwendung eines Fußes schützt gegen eindringender Feuchtigkeit, etwa bei der Fußbodenreinigung.

Die Erfindung wird durch die beiliegenden Abbildungen näher erläutert. Es zeigen:
- Fig. 1: Einen Querschnitt durch ein erfindungsgemäßes Kammersystem in perspektivischer und in Schnittdarstellung;
- Fig. 2: eine Darstellung erfindungsgemäß verwandter Strom- und Neutralleiter;
- Fig. 3: eine Darstellung eines erfindungsgemäß verwandten Erdleiters;
- Fig. 4: den Erdleiter von Fig. 3 in seitlicher Ansicht;
- Fig. 5: das Kanalsystem von Fig. 1 mit der Aufteilung in Leiterteil und Führungsteil;
- Fig. 6: eine Abdeckleiste für den Zugang zum ersten Kanal.

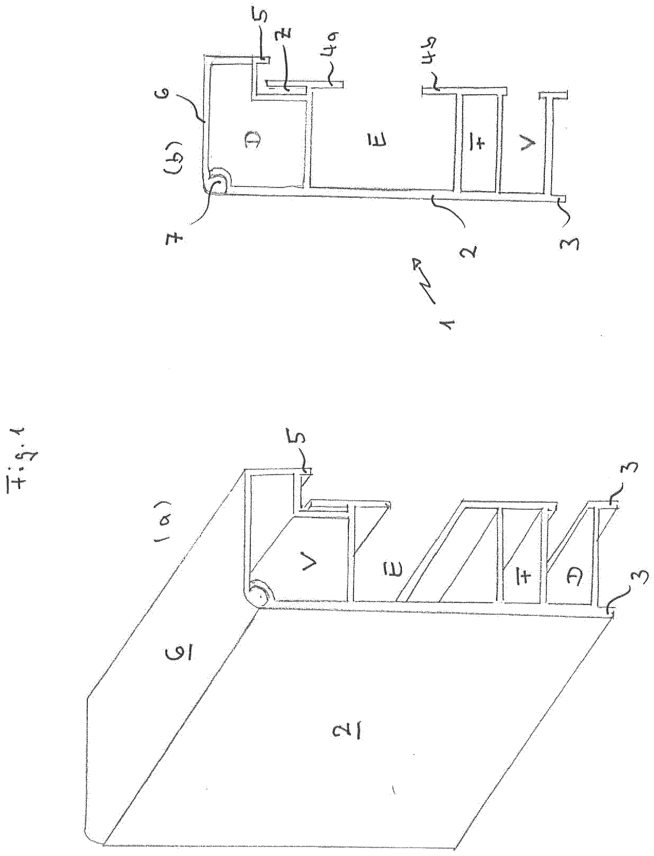

Fig. 1 zeigt eine perspektivische Darstellung eines erfindungsgemäßen Kanalsystems (a) und eine Schnittdarstellung dieses Systems (b). Das Kanalsystem 1 gemäß der Erfindung weist eine Mehrzahl von läng verlaufenden Kanälen V, E, F, D, Z auf, die parallel zueinander angeordnet sind. Die Kanäle V, E, F, D haben eine gemeinsame Rückwand 2, die in einem Fuß 3 endet, der gleichzeitig als Standfuß für das Kanalsystem bei Montage als Sockelleiste dient.

Im Zentrum befindet sich ein erster Kanal E, der zur Aufnahme des Stromleiters und des Neutralleiters dient. Gegenüber der Rückwand 2 befindet sich ein Zugang, der oben und unten durch zwei Leisten 4a und 4b begrenzt wird. Der Zugang befindet sich zwischen den Leisten 4a und 4b, die gleichzeitig als Anschlag für einen herkömmlichen Netzstecker dienen, dessen Kontaktstifte in die erste Kammer E hineinragen.

Oberhalb des ersten Kanals E befindet sich auf der Zugangsseite der zweite Kanal Z, der der Aufnahme des Erdleiters dient. Der zweite Kanal Z ist schlitzförmig ausgebildet, da er lediglich die Schiene des Erdleiters in leitenden Kontakt mit dem Metallgehäuse des Kanalsystems aufnehmen soll. Die Leiterschiene befindet sich innerhalb des zweiten Kanals Z, die Kontaktzungen ragen in regelmäßigen Abständen aus den zweiten Kanal Z heraus in den von der Begrenzung der zweiten Kammer und der Leiste 5 auf der Frontseite des Kanalsystems begrenzten Raum. Die Position der Kontaktzungen ist in üblicher Weise auf die Position der Steckkontakte (Kontaktbuchsen) der Leiter in Kanal E abgestimmt.

Ein dritter Kanal D ist zur Oberseite des Kanalsystems 1 hin durch ein Deckel 6 abgeschlossen, der über ein Scharnier 7 beweglich gestaltet ist. Hier können weitere Leitungen verlaufen, etwa für Telefon-, Fernseh- oder Internetanschlüsse. Der Deckel 6 ist in einem Scharnier 7 gelagert und kann aufgeklappt werden, wobei es sinnvoll ist, den Deckel 6 zu segmentieren, sodass er abschnittweise geöffnet werden kann, was die Handhabung insbesondere bei längeren Kanalsystemen erleichtert.

Für weitere Funktionen stehen verschiedene weitere Kanäle zur Verfügung, so ein vierter Kanal V im Fußbereich des Kanalsystems 1, der zur Aufnahme einer Lichtleiste und dazugehörigen Zuleitungen bestimmt ist. Die Lichtleiste befindet sich an der offenen Frontseite des Kanals V und kann eine Vielzahl von LED-Elementen aufweisen.

Ein fünfter Kanal F kann für weitere Leitungen verwandt werden, insbesondere auch für Leitungen, die nicht unmittelbar gebraucht werden und ansonsten in einer Wand verlegt werden würden.

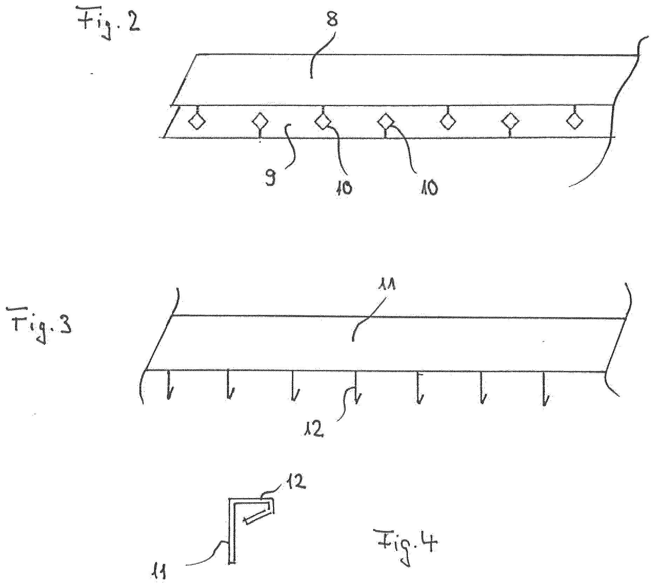

Fig. 2 zeigt den Strom- und den Neutralleiter 8 und 9 mit den davon abzweigenden Kontaktbuchsen 10, die alternierend und in einer Ebene in den zwischen Stromleiter 8 und Neutralleiter 9 liegenden Raum reichen und in einem Abstand von 19 mm angeordnet sind. Es handelt sich um herkömmliche Kontaktbuchsen oder -hülsen, in die ein Normstecker gemäß CEE eingesteckt werden kann. Die Leiter sind, wie angedeutet, als Leiterschienen ausgebildet. Vorzugsweise wird für die Leiter ein Material verwandt, dass leicht zu bearbeiten und insbesondere zu verformen ist, insbesondere Aluminium, Aluminiumlegierungen, Kupfer, Kupferlegierungen und besonders bevorzugt Kupferlegierungen mit Zink, etwa CuZn30, das eine hervorragende Kaltverformbarkeit aufweist.

Fig. 3 zeigt schematisch den Erdleiter 11 mit den davon abgehenden Kontaktzungen 12, die geeignet sind, einen Kontakt zu dem Erdleiter eines Netzsteckers herzustellen.

Fig. 4 zeigt den Erdleiter 11 im Querschnitt mit der Leiterschiene und der Federzunge 12 zur Herstellung des Kontakts zum Schutzkontakt eines damit ausgestatten Netzsteckers.

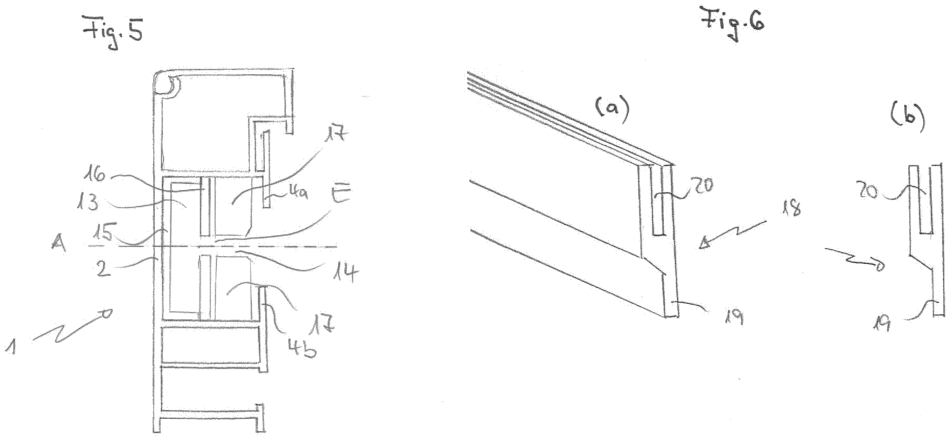

Fig. 5 zeigt das Kanalsystem von Fig. 1 mit der weiteren Aufteilung des Kanals E. Kanal E ist in einen Leiterteil 13 und einen Führungsteil 14 aufgeteilt, wobei der Leiterteil 13 über ein Kunststoffprofil 15 als Isolierung verfügt. Das Kunststoffprofil 15 kann beispielsweise aus PVC gefertigt sein und ist vorzugsweise an der zur Zugangsöffnung weisenden Seite offen. Hier liegt ein Deckel 16 an, der mittig geschlitzt oder gelocht ist, um den Kontaktstiften eines Netzsteckers Zugang zu dem im Kastenprofil 13 liegenden Kontaktbuchsen (10, hier nicht dargestellt) zu ermöglichen. Die Ebene, in der die Kontaktbuchsen liegen und in der die Kontaktstifte eines Netzsteckers eingeführt werden, ist mit A gekennzeichnet.

Vor dem Leiterteil 13 liegt der Führungsteil 14, in dem sich Führungselemente 17, ebenfalls mit einer zentralen Durchtrittsmöglichkeit für die Kontaktstifte eines Netzsteckers angeordnet sind. Bei den Führungselementen 17 handelt es sich beispielsweise um Hohlprofile aus PVC, die längs in den vorderen Teil des ersten Kanals E eingeschoben und an der Wandung des Kanals E festgelegt sind.

Fig. 6 schließlich zeigt eine Abdeckleiste, wie sie auf die beiden Leisten 4a und 4b im Zugangsbereich des Kanals E aufgeschoben werden kann, um den Kanal E nach außen abschirmen. Die Abdeckleiste 18, perspektivisch (a) und im Schnitt (b) dargestellt, besteht vorzugsweise aus einem flexiblen Material, hat aber zumindest eine flexible Zunge 19. Der Körper selbst wird auf die Leisten 4a bzw. 4b aufgeschoben und dort von der Nut 20 im Kontaktteil zu den Leisten 4a bzw. 4b gehalten. Die auf die obere (4a) und untere (4b) Leiste aufgeschobenen Leistenabschnitte können sich mit ihren Zungen 19 leicht überlappen und damit den Zugang zum Kanal E weitgehend staubsicher abdecken. Zugleich bilden die Abdeckleisten eine Kindersicherung, die Eingriffe in den im Kanalbereich verhindert.

## Patentansprüche

1. Kanalsystem mit Stromleiter und einer Vielzahl von Anschlüssen für Stromverbraucher, wobei das Kanalsystem die Form eines Längsprofils hat, das ein Gehäuse mit einer Mehrzahl von Kanälen und wenigstens einen Strom-, einen Neutral-, sowie einen Erdleiter aufweist, wobei
das Gehäuse des Kanalsystems (1) aus Metall besteht, der Strom- (8) und der Neutralleiter (9) als Schienen ausgelegt sind, die parallel zueinander verlaufen und Steckkontakte (10) aufweisen, die alternierend vom Strom-(8) und Neutralleiter (9) in eine zwischen diesen liegende Ebene reichen, dergestalt, dass die Steckkontakte (10) in gleichen Abständen zueinander angeordnet sind, wobei die Abstände den Normabständen der Kontaktstifte üblicher Netzstecker entsprechen, Strom- (8) und Neutralleiter (9) isoliert in einem ersten Kanal (E) angeordnet sind,
der Erdleiter (11) in einem zweiten Kanal (Z) angeordnet und als Schiene ausgebildet ist und in regelmäßigen Abständen Kontaktelemente (12) aufweist, die hinsichtlich ihrer Positionierung den Anforderungen eines üblichen Netzsteckers mit Schutzkontakt entsprechen, wobei die Abstände zwischen den Steckkontakten (10) und zwischen den Kontaktelementen (12) die gleichen sind, und der erste Kanal (E) Führungselemente (17) für die Kontaktstifte eines Netzsteckers aufweist und durch wenigstens eine flexible Abdeckleiste (18) nach außen gesichert ist.

2. Kanalsystem nach Anspruch 1, **dadurch gekennzeichnet, dass** der erste Kanal in einen Leitungsteil (13) und einen Führungsteil (14) unterteilt ist.

3. Kanalsystem nach Anspruch 2, **dadurch gekennzeichnet, dass** der Leitungsteil (13) ein Kunststoffkastenprofil (15) zur Aufnahme des Strom- (8) und des Neutralleiters (9) aufweist.

4. Kanalsystem nach Anspruch 3, **dadurch gekennzeichnet, dass** das Kunststoffkastenprofil (15) einen Deckel (16) mit Durchbrechungen für die Kontaktstifte eines Netzsteckers aufweist.

5. Kanalsystem nach einem der vorstehenden Ansprüche 2 bis 4, **dadurch gekennzeichnet, dass** im Führungsteil (14) Führungselemente (17) für die Kontaktstifte von Netzsteckern angeordnet sind.

6. Kanalsystem nach einem der vorstehenden Ansprüche, **dadurch gekennzeichnet, dass** der Erdleiter (11) im zweiten Kanal (Z) in leitendem Kontakt mit dem Metall des Kanalsystems (1) steht.

7. Kanalsystem nach einem der vorstehenden Ansprüche, **dadurch gekennzeichnet, dass** der erste Kanal (E) auf seiner Zugangsseite zwei flexible Abdeckleisten (18) mit beweglichen Lippen (19) aufweist, die das Einführen von Kontaktstiften eines Netzsteckers in den ersten Kanal (E) erlauben.

8. Kanalsystem nach Anspruch 7, **dadurch gekennzeichnet, dass** die flexiblen Abdeckleisten (18) an Vorsprüngen (4a, 4b) des Kanalsystems (1) festgelegt sind.

9. Kanalsystem nach einem der vorstehenden Ansprüche, **dadurch gekennzeichnet, dass** die Kontaktelemente (12) des Erdleiters (11) Kontaktzungen sind.

10. Kanalsystem nach einem der vorstehenden Ansprüche, **gekennzeichnet durch** einen dritten Kanal (D) zur Aufnahme von Leitungskabeln.

11. Kanalsystem nach Anspruch 10, **dadurch gekennzeichnet, dass** der dritte Kanal (D) eine Abdeckklappe (6) aufweist.

12. Kanalsystem nach Anspruch 10 oder 11, **dadurch gekennzeichnet, dass** der dritte Kanal (D) in regelmäßigen Abständen Anschlussmöglichkeiten zu den Leitungskabeln aufweist.

13. Kanalsystem nach einem der vorstehenden Ansprüche, **gekennzeichnet durch** einen vierten Kanal (V) zur Aufnahme einer Lichtleiste.

14. Kanalsystem nach Anspruch 13, **gekennzeichnet durch** eine LED-Lichtleiste.

15. Kanalsystem nach einem der vorstehenden Ansprüche, **dadurch gekennzeichnet, dass** das Metall Aluminium, eine Aluminiumlegierung, Kupfer oder eine Kupferlegierung ist.

16. Kanalsystem nach Anspruch 15, **dadurch gekennzeichnet, dass** das Metall des Strom-(8), Neutral- (9) und/oder Erdleiters (11) eine Kupfer-Zink-Legierung mit etwa 30% Zink (CuZn30) ist, die weitere Legierungselemente enthalten kann.

## Claims

1. Duct system comprising conductors and a plurality of connections for energy consumers, wherein the duct system is in the shape of a longitudinal profile that comprises a housing having a plurality of ducts and at least one current conductor, one neutral wire and one earth wire, wherein the housing of the duct system (1) consists of metal, the current conductor (8) and the neutral wire (9) are designed as bars that extend in parallel with one another and comprise plug contacts (10) which extend, alternately, from the current conductor (8) and the neutral wire (9), in a plane located therebetween, such that the plug contacts (10) are arranged so as to be at equal mutual spacings, wherein the spacings correspond to the standard spacings of the wiring pins of conventional mains plugs,
the current conductor (8) and neutral wire (9) are arranged in an insulated manner, in a first duct (E),
the earth wire (11) is arranged in a second duct (Z) and is designed as a bar and comprises contact elements (12) at regular spacings, the positioning of which corresponds to the requirements of a conventional mains plug comprising an earthing contact, wherein the spacings between the plug contacts (10) and between the contact elements (12) are the same, and the first duct (E) comprises guide elements (17) for the wiring pins of a mains plug, and is protected towards the outside by means of at least one flexible cover strip (18).

2. Duct system according to claim 1, **characterised in that** the first duct is divided into a conduction part (13) and a guide part (14).

3. Duct system according to claim 2, **characterised in that** the conduction part (13) comprises a plastics box section (15) for receiving the current conductor (8) and the neutral wire (9).

4. Duct system according to claim 3, **characterised in that** the plastics box profile (15) comprises a cover (16) having apertures for the wiring pins of a mains plug.

5. Duct system according to any of the preceding claims 2 to 4, **characterised in that** guide elements (17) for the wiring pins of mains plugs are arranged in the guide part (14).

6. Duct system according to any of the preceding claims, **characterised in that** the earth wire (11) in the second duct (Z) is in conductive contact with the metal of the duct system (1).

7. Duct system according to any of the preceding claims, **characterised in that** the first duct (E) comprises two flexible cover strips (18) having movable lips (19) on the access side thereof, which lips allow for wiring pins of a mains plug to be introduced into the first duct (E).

8. Duct system according to claim 7, **characterised in that** the flexible cover strips (18) are fixed on projections (4a, 4b) of the duct system (1).

9. Duct system according to any of the preceding claims, **characterised in that** the contact elements (12) of the earth wire (11) are contact tongues.

10. Duct system according to any of the preceding claims, **characterised by** a third duct (D) for receiving line cables.

11. Duct system according to claim 10, **characterised in that** the third duct (D) comprises a cover flap (6).

12. Duct system according to either claim 10 or claim 11, **characterised in that** the third duct (D) comprises options for connection to the line cables, at regular spacings.

13. Duct system according to any of the preceding claims, **characterised by** a fourth duct (V) for receiving a lighting strip.

14. Duct system according to claim 13, **characterised by** an LED lighting strip.

15. Duct system according to any of the preceding claims, **characterised in that** the metal is aluminium, an aluminium alloy, copper, or a copper alloy.

16. Duct system according to claim 15, **characterised in that** the metal of the current conductor (8), neutral wire (9) and/or earth wire (11) is a copper-zinc alloy having approximately 30 % zinc (CuZn30), which can contain further alloying elements.

## Revendications

1. Système de canaux comprenant un conducteur de courant et une pluralité de raccordements pour des consommateurs de courant, le système de canaux présentant la forme d'un profilé longitudinal, qui comporte un boîtier doté de plusieurs canaux et au moins un conducteur de courant, un conducteur neutre ainsi qu'un conducteur de terre, le boîtier du système de canaux (1) étant constitué de métal, le conducteur de courant (8) et le conducteur neutre (9) étant conçus sous la forme de rails, qui s'étendent parallèlement l'un à l'autre et comportent des contacts à fiche (10), qui s'étendent alternativement à partir du conducteur de courant (8) et du conducteur neutre (9) dans un plan situé entre ceux-ci, de telle sorte que les contacts à fiche (10) sont disposés à égale distance les uns des autres, les distances correspondant aux distances standard entre les broches de contact de fiches d'alimentation usuelles,
le conducteur de courant (8) et le conducteur neutre (9) étant disposés isolés dans un premier canal (E),
le conducteur de terre (11) étant disposé dans un deuxième canal (Z) et réalisé sous la forme d'un rail et comportant des éléments de contact (12) à intervalles réguliers, qui correspondent, en ce qui concerne leur positionnement, aux exigences d'une fiche d'alimentation usuelle avec contact de mise à la terre, les distances entre les contacts à fiche (10) et entre les éléments de contact (12) étant les mêmes, et le premier canal (E) comportant des éléments de guidage (17) pour les broches de contact d'une fiche d'alimentation et étant protégé par rapport à l'extérieur par au moins une baguette flexible de recouvrement (18).

2. Système de canaux selon la revendication 1, **caractérisé en ce que** le premier canal est divisé en une partie conduction (13) et une partie guidage (14).

3. Système de canaux selon la revendication 2, **caractérisé en ce que** la partie conduction (13) comporte un profilé carré en matière plastique (15) pour recevoir le conducteur de courant (8) et le conducteur neutre (9).

4. Système de canaux selon la revendication 3, **caractérisé en ce que** le profilé carré en matière plastique (15) comporte un couvercle (16) doté de perforations pour les broches de contact d'une fiche d'alimentation.

5. Système de canaux selon l'une des revendications 2 à 4, **caractérisé en ce que** des éléments de guidage (17) pour les broches de contact de fiches d'alimentation sont disposés dans la partie guidage (14).

6. Système de canaux selon l'une des revendications précédentes, **caractérisé en ce que** le conducteur de terre (11) dans le deuxième canal (Z) est en contact conducteur avec le métal du système de canaux (1).

7. Système de canaux selon l'une des revendications précédentes, **caractérisé en ce que** le premier canal (E) comporte, sur son côté accès, deux baguettes flexibles de recouvrement (18) dotées de lèvres (19) mobiles, qui permettent l'insertion de broches de contact d'une fiche d'alimentation dans le premier canal (E).

8. Système de canaux selon la revendication 7, **caractérisé en ce que** les baguettes flexibles de recouvrement (18) sont fixées sur des saillies (4a, 4b) du système de canaux (1).

9. Système de canaux selon l'une des revendications précédentes, **caractérisé en ce que** les éléments de contact (12) du conducteur de terre (11) sont des lames de contact.

10. Système de canaux selon l'une des revendications précédentes, **caractérisé par** un troisième canal (D) pour recevoir des câbles conducteurs.

11. Système de canaux selon la revendication 10, **caractérisé en ce que** le troisième canal (D) comporte un volet de protection (6).

12. Système de canaux selon la revendication 10 ou 11, **caractérisé en ce que** le troisième canal (D) comporte, à intervalles réguliers, des possibilités de raccordement aux câbles conducteurs.

13. Système de canaux selon l'une des revendications précédentes, **caractérisé par** un quatrième canal (V) destiné à recevoir une barre lumineuse.

14. Système de canaux selon la revendication 13, **caractérisé par** une barre lumineuse à DEL.

15. Système de canaux selon l'une des revendications précédentes, **caractérisé en ce que** le métal est de l'aluminium, un alliage d'aluminium, du cuivre ou un alliage de cuivre.

16. Système de canaux selon la revendication 15, **caractérisé en ce que** le métal du conducteur de courant (8), du conducteur neutre (9) et/ou du conducteur de terre (11) est un alliage cuivre-zinc avec environ 30 % de zinc (CuZn30), qui peut contenir d'autres éléments d'addition.
